Europäisches Patentamt

**European Patent Office**

**Office européen des brevets**

(19)

(11) Publication number: **0 053 295**
**A2**

(12)

# EUROPEAN PATENT APPLICATION

(21) Application number: **81109339.2**

(22) Date of filing: **30.10.81**

(51) Int. Cl.³: **G 01 N 27/90**

(30) Priority: **27.11.80 CA 365635**

(43) Date of publication of application: **09.06.82**
**Bulletin 82/23**

(84) Designated Contracting States: **DE FR GB IT**

(71) Applicant: **O'Connor, Henry Moncrieff, Box 67 Site 15, SS 3, Fredericton New Brunswick E3B 5W9 (CA)**

(72) Inventor: **O'Connor, Henry Moncrieff, Box 67 Site 15, SS 3, Fredericton New Brunswick E3B 5W9 (CA)**

(74) Representative: **Denmark, James, c/o Bailey Walsh & Co. 5 York Place, Leeds LS1 2SD Yorkshire (GB)**

(54) **Multifrequency eddy current testing device.**

(57) The prior art of multifrequency eddy current instruments has required a band pass filter to separate each individual frequency. The drawback of the above mentioned method is the requirement to change the bandpass filter if the inspection frequency is changed. This invention relates to a design that eliminates the requirement for a bandpass filter. The aggregate of inspection frequencies are applied to linear multipliers which shift the information from one of the inspection frequencies to a base band signal. The information is then separated from the signals of other frequencies with a low pass filter. The advantage is that an inspection frequency may be changed by changing the oscillator frequency only.

- 1 -

## Multifrequency Eddy Current Testing Device

Multifrequency Eddy Current Inspection apparatus has advantages over single frequency eddy current apparatus in that additional information is available in a multifrequency eddy current inspection. This additional information is advantageous in the measurement of test parameters of inspection specimens.

Multifrequency Eddy Current Instruments apply a multidimensional excitation current to an eddy current coil to magnetically couple the coil to the test sample. The output signal from the eddy current coil contains information obtained from the inspection specimen from each of the frequencies contained in the multidimensional excitation current. The information is contained in the Fourier coefficients of each individual frequency.

The current method of detecting the Fourier coefficients from the output signal is described by H. L. Libby in U. S. Patent 3,229,198 dated January 11, 1966, and is also described by D. J. Renken et al in "A Multifrequency Eddy Current Testing System" published in Argonne National Laboratory 5861 dated 1958. Band pass filters are used to separate frequencies before the Fourier coefficients for each frequency are obtained. This invention describes a unique and new method for obtaining the Fourier coefficients.

To obtain the Fourier coefficients from the output signal, the output signal is split into its individual frequency components by separately shifting each frequency to a base band signal and

0053295

- 2 -

using a low pass filter to isolate each individual frequency. From the output of each low pass filter, the Fourier coefficients are obtained for that frequency.

In the preferred embodiment, this new method applies the output of two or more oscillators (1) (2) through a power amplifier (3) and optional transformer (4) to an eddy current probe (5) comprising one or more coils of wire. The output signal from the eddy current probe (5) is applied directly or through an error amplifier (6) to detectors of the linear multiplier type (7, 8, 9, 10).

The linear multiplier has two inputs, X and Y and an output Z which is determined from the input signals by the mathematical relationship $Z=KXY$ where K is the gain constant of the multiplier. Each multiplier receives the output signal from the probe on its X (or Y) input and each multiplier receives the 0° (or 90°) component of one of the frequencies in the multidimensional inspection current on its Y (or X) input. The output of each multiplier will contain one Fourier coefficient from one frequency of the output signal from the eddy current probe as well as interference signals from the other frequencies. The Fourier coefficient in the output of the multiplier will be low frequency, or DC signals and the interference signals will be higher frequencies. The Fourier coefficient can be separated from the interference signals which are higher frequencies by

- 3 -

low pass filters (11, 12, 13, 14).

It is understood in the above descriptions that more than two frequencies may be used to obtain more information about the test object. It is further understood that the transformer (4) and amplifier (6) are optional. It is understood that the low pass filters (11, 12, 13, 14) may be part of circuitry following the detector and that the output signals may be combined or displayed or recorded in any manner.

- 4 -

Claims:

1. An apparatus for testing of electrically conductive material with eddy currents at two or more frequencies simultaneously and means for separating the information from the two or more frequencies with a linear multiplier detector and low pass filter (without the use of a band pass filter) to achieve the following advantages:

    1)  Lower cost.

    2)  Ease of change in frequency:  The oscillating frequency only need be changed, a change in filter frequencies is not required.

    3)  Elimination of the requirement for stable band pass filters.

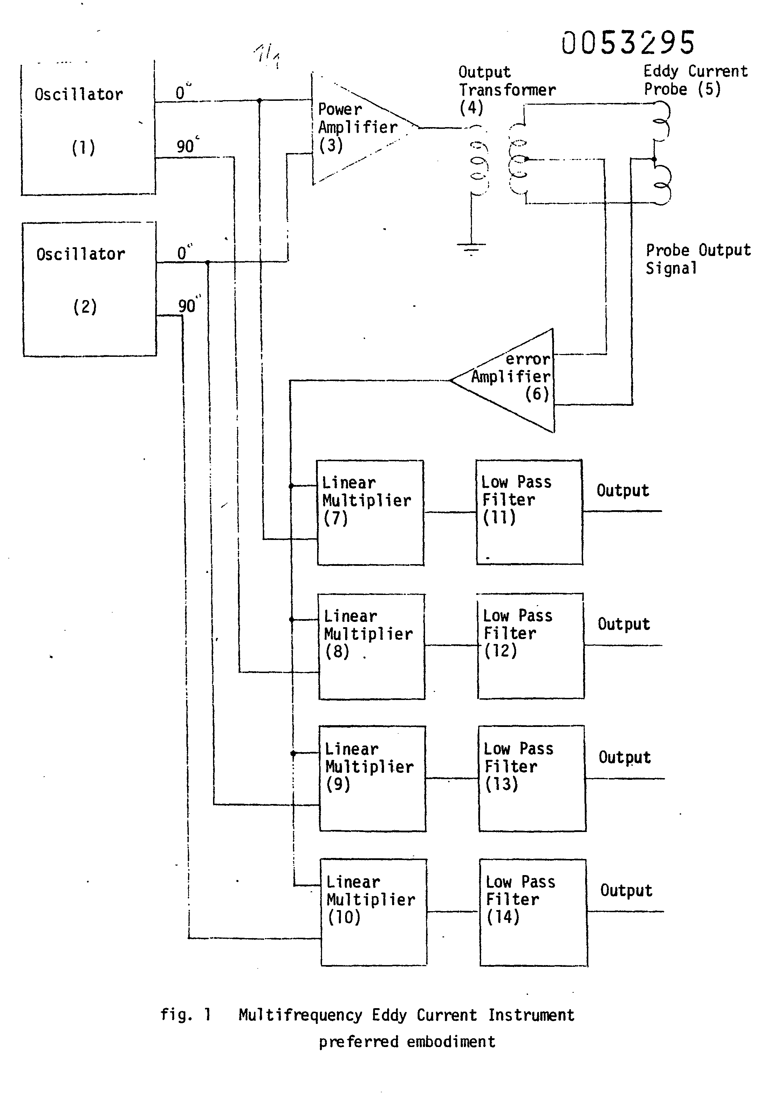

fig. 1    Multifrequency Eddy Current Instrument
preferred embodiment